Europäisches Patentamt

European Patent Office

Office européen des brevets

(11) Publication number: **0 638 977 A1**

# EUROPEAN PATENT APPLICATION

(21) Application number: **94112548.6**

(22) Date of filing: **11.08.94**

(51) Int. Cl.6: **H02G 15/18**, H02G 1/14

(30) Priority: **13.08.93 JP 201653/93**

(43) Date of publication of application:
**15.02.95 Bulletin 95/07**

(84) Designated Contracting States:
**DE FR GB IT**

(71) Applicant: **MINNESOTA MINING AND
MANUFACTURING COMPANY
3M Center,
P.O. Box 33427
St. Paul,
Minnesota 55133-3427 (US)**

(72) Inventor: **Tanaka,Kiyotaka
Sumitomo 3M Ltd.,
33-1,Tamagawadai 2-Chome
Setagaya-ku,
Tokyo 158 (JP)**
Inventor: **Nakamura,Tsunehisa
Sumitomo 3M Ltd.,**
**33-1,Tamagawadai 2-Chome
Setagaya-ku,
Tokyo 158 (JP)**
Inventor: **Kitamura,Osamu, Tokyo
Electr.Power Co.Inc.
1-3,Uchisaiwai-cho,1-Chome
Chiyoda-ku,
Tokyo (JP)**
Inventor: **Mochizuki,Kazutoshi, Tokyo
Electr.Power Co.Inc.
1-3,Uchisaiwai-cho,1-Chome
Chiyoda-ku,
Tokyo (JP)**

(74) Representative: **Hilleringmann, Jochen,
Dipl.-Ing. et al
Patentanwälte
von Kreisler-Selting-Werner,
Postfach 10 22 41
D-50462 Köln (DE)**

(54) **Tube for covering connection of electric wires.**

(57) A covering tube (10) has a tubular sleeve section (12) made of a flexible electro-insulating material, and electro-insulating tubular sealing sections (14) provided at the ends of the sleeve sections (12). The sealing sections (14) include elastically shrinkable elements (16) formed integrally with the sleeve section (12), and core elements (18) arranged within the shrinkable elements (16) so as to hold the shrinkable elements (16) in an expanded state with a predetermined diameter. The elastically shrinkable elements (16) preferably are made of rubber materials having electro-insulation, high elastic recovery, and excellent elongation set properties. When the core elements (18) are removed upon being fitted to the connection, the elastically shrinkable elements (16) are brought into close contact with the outer surface of the cable sheaths due to an elastic recovery force of the shrinkable elements.

FIG.3a

The present invention relates to a tube for covering a connection of electric wires, which is used for treating the connection of electric wires, such as a straight or branched connection, in a waterproofing, electrically insulating, and mechanically protecting manner.

Conventionally, various methods have been used for covering the electric wires exposed in a connection of cables (coated electric wires), or of a cable and the other electro-conductive terminal member, for the purpose of waterproof, electro-insulation, and mechanical protection treatment. As a simplest method, the practice has been to affix a waterproof adhesive tape to the exposed electric wires in the connection. Another method has been also known, in which the connection is covered with a separate tubular member made of rubber or plastic, and the tubular member is fixed on the cable sheath while being sealed at the ends of the tubular member by a waterproof adhesive tape. These methods are simple and inexpensive, but it is difficult to perform uniform and stable treatment because of the fluctuation of the finished state of the affixed waterproof adhesive tape according to operators. Also, there is an occasion where the waterproof function of the waterproof adhesive tape is incomplete, and thus a reliable electro-insulating treatment cannot be performed.

To easily and stably provide sufficient moisture resistance, electro-insulation, and mechanical protection properties to a connection of electric wires, a covering tube has been known, which comprises a tubular member having an inner diameter greater than an outer diameter of the connection and a length greater than that of the connection and which is arranged arranged while enveloping the connection and then shrunk by any ranged while enveloping the connection and then shrunk by any suitable means, thereby closely covering the connection due to the shrinkage force of the tube (hereinafter, this tube is referred to as a "shrinkable tube"). There are two kinds of such shrinkable tubes; a heat shrinkable tube comprising a tubular member made of a polymeric material having a high thermal shrinkability and shrunk by an external heat source (see Japanese Unexamined Patent Publication (Kokai) No. 1-295614) and a cored elastic shrinkable tube comprising a tubular member made of a polymeric material having excellent elongation set properties, which is preliminarily expanded in its diameter in an elastic manner over the entire length thereof by a tubular core member made of a hard plastic, and is elastically shrunk by removing the core member when being fitted onto the connection (see Japanese Unexamined Patent Publication (Kokai) No. 3-143217).

The above-mentioned shrinkable tubes may shorten the working time and stabilize the finished conditions and have an advantage in that a sufficient moisture resistance, electro-insulation, and mechanical protection properties are provided to the connection of electric wires without using a waterproof adhesive tape, because the tubular member can be tightly fitted onto exposed wires and cable sheaths by the shrinkage force of the tubular member. In the case of the heat shrinkable tube, however, there is a problem in that a heat source such as a burner or the like is necessary and a relatively high skill is required in the heat shrinking operation. On the other hand, no skill is necessary for the cored elastic shrinkable tube, but there is a problem in that the longer the length of the tubular member, the longer the time required for removing the core member. In addition, because of the existence of the core member, it is impossible to fit the cored elastic shrinkable tube onto the connection while confirming a relative position of the connection inside the tubular member by depressing a tubular wall thereof with fingers. Therefore, it is necessary for improving the reliability of the covering treatment to form the tubular member so as to have a total length sufficiently longer than that of the connection of electric wires.

The object of the present invention is to provide a tube for covering a connection of electric wires that can quickly and stably cover the connection without using any heat source and enable to confirm a how of the position of the connection inside the tube, thereby easily and reliably obtaining an excellent moisture resistance, electro-insulation, and mechanical protection properties.

To achieve the above object, the present invention provides a tube for covering a connection of electric wires, comprising a tubular sleeve section made of an electrical-insulating flexible material, and electrical-insulating tubular sealing sections respectively provided at end portions of the sleeve section; the tube being fitted onto the connection of electric wires in such a manner that the sleeve section covers bare portions of the electric wires in the connection and the sealing sections surround cable sheaths adjacent to the bare portions, characterized in that each of the sealing sections comprises an elastically shrinkable element connected to each end portion of the sleeve section, and brought into close contact with an outer surface of the cable sheath due to shrinkage force of the shrinkable element caused by being elastically expanded; and a core element arranged inside the elastically shrinkable element so as to hold the shrinkable element in an elastically expanded state in which an inner diameter of the shrinkable element is greater than an outer diameter of the cable sheath, and adapted to be removed when fitting the tube onto the connection.

2

According to the preferred aspect of the present invention, at least the elastically shrinkable element of each sealing sections may be made of a rubber material having high elastic recovery and excellent elongation set properties. The sleeve section may be integrally molded with the elastically shrinkable element of each sealing section. A minimum inner diameter of said sleeve section may be greater than a maximum outer diameter of the connection onto which the tube is fitted. The sleeve section may be of a straight pipe or a branched pipe.

The elongation set value required in the above aspects is preferably not more than 40%, more preferably not more than 15%, measured by the measuring method according to JIS:K6301 (at 100 °C, 22 hours). If the elongation set value is more than 40%, there is a risk that the tightness in the sealing section will deteriorate with age. On the other hand, if the elongation set value is not more than 15%, a sufficient sealing effect can be obtained even when the tube is used under strict conditions, such as being used in outdoors and fitted onto a large diameter connection.

By way of the present invention a tube for covering a connection of electric wires is provided, which tube can be quickly fitted to the connection without using any heat source and can provide reliable moisture resistant, electrically insulating, and mechanically protecting properties. The tube of the present invention has a tubular sleeve section made of a flexible electro-insulating material, and electro-insulating tubular sealing sections provided at the ends of the sleeve section.

The sealing sections include elastically shrinkable elements formed intregrally with the sleeve section, and core elements arranged within the shrinkable elements so as to hold the shrinkable elements in an expanded state with a predetermined diameter. The elastically shrinkable elements preferably are made of rubber materials having electro-insulation, high elastic recovery, and excellent elongation set properties. When the core elements are removed upon being fitted to the connection, the elastically shrinkable elements are brought into close contact with the outer surface of the cable sheaths due to an elastic recovery force of the shrinkable elements.

Preferably, the tube according to the invention is fabricated in that first the tube is arranged on the connection of electric wires in such a manner that the sleeve section covers the bare portions of the electric wires and the sealing sections envelop the cable sheaths adjacent to the bare portions of the wires. In this position, when the core elements of the sealing sections are removed, the elastically shrinkable elements shrink so as to be closely fitted onto the cable sheaths. As a result, reliable moisture resistance, electro-insulation, and mechanical protection properties can be obtained. Since the sleeve section has flexibility, it is possible to fit the tube onto the connection while confirming the position of the connection by depressing the tubular wall of the sleeve section by the fingers. Also, it is possible to rapidly remove the core elements because they are provided only at the end portions of the sleeve section.

The present invention will be described below in more detail with reference to the preferred embodiments illustrated in the attached drawings, in which there is shown in

Fig. 1        a perspective view of a covering tube according to one embodiment of the present invention,

Fig. 2        a sectional side view of the covering tube shown in Fig. 1,

Figs. 3a,b    cross-sections of the covering tube of Fig. 1, which is mounted onto a cable connection, shown in the states before removing core elements (Fig. 3a) and after removing one of the core elements (Fig. 3b), and

Fig. 4        a partially broken side view of a covering tube according to another embodiment of the present invention.

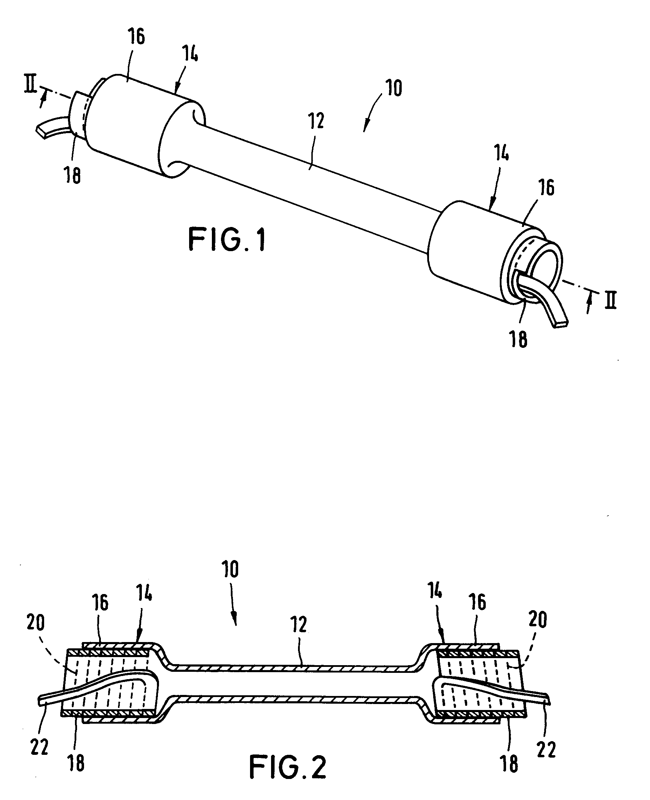

Figure 1 is a perspective view of a covering tube 10 for covering a connection of electric wires, according to one embodiment of the present invention, and Figure 2 is a sectional side view of the covering tube 10. The covering tube 10 is of a generally cylindrical tubular member having two opposite ends and is mainly used for covering and protecting a linear connection of a cable or cables. The covering tube 10 is provided with a sleeve section 12 having a length for enveloping bare electric wires exposed at cable ends and the end portions of cable sheaths adjacent to the bare electric wires. Preferably, an inner diameter of the sleeve section 12 is larger than outer diameters of the bare wires and the cable sheaths' end portions. The sleeve section 12 is made of a flexible material having electro-insulation properties.

Sealing sections 14 are respectively formed at the two ends of the sleeve section 12, for surrounding near the ends of the calbe sheaths when the tube is fitted onto the connection of wires. Each sealing section 14 includes an elastically shrinkable element 16 with a generally cylindrical shape, which is integrally formed with the sleeve section 12 as an extension of the latter, and a core element 18 arranged inside the elastically shrinkable element 16, so as to hold the shrinkable element in an elastically expanded state where the inner diameter of the shrinkable element 16 is larger than an outer diameter of the cable sheath to be surrounded.

The core element 18 of each sealing section 14 is a cylindrical member made of, e.g., a hard plastic material having a rigidity sufficient to hold the elastically shrinkable element 16 in the above-mentiond expanded state against an elastic recovery force therof. The core element 18 is provided with a cut-line 20 spirally extending along the entire length of the cylindrical wall of the core element, and a strip-like extension 22 extending from a body of the core element at an inner end of the sealing section 14. A free end of the extension 22 is arranged at an outer opening of the sealing section 14. The core elements 18 are removed from the sealing sections 14 when the covering tube 10 is fitted onto the connection of electric wires, in a manner as described later.

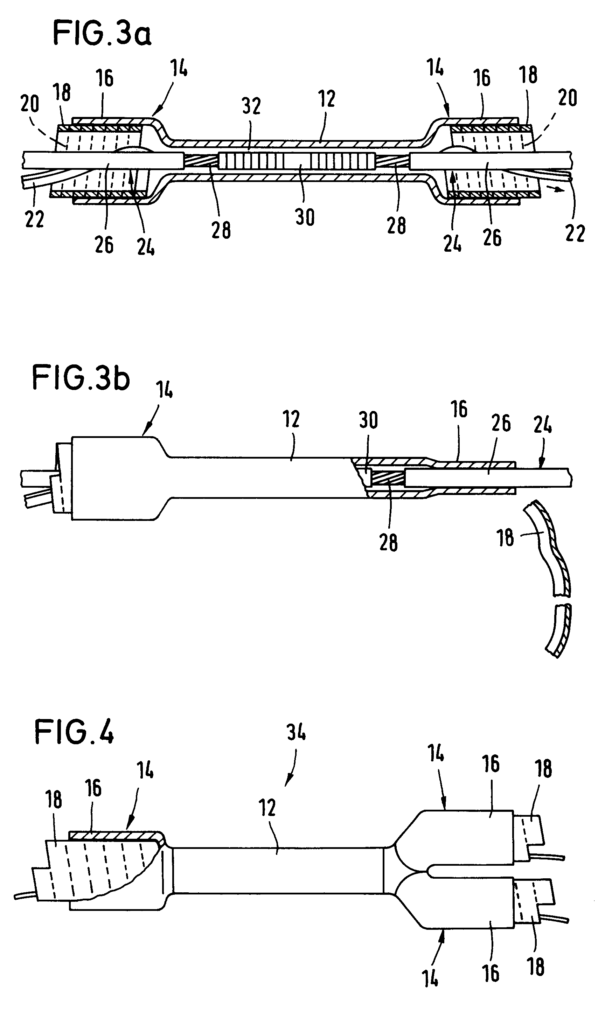

The operations of the covering tube 10 will be explained below with reference to Figure 3. As shown in Figure 3(a), in a linear connection of cables, the electric wires 28 exposed by removing sheaths 26 and insulators (not shown) of two cables 24 to be connected are joined through a connector 30 with each other. Before connecting the cables 24, the covering tube 10 is mounted on one cable 24, so as to insert the cable 24 therethrough. After two cables are connected with each other, the covering tube 10 is displaced to an operating position (Figure 3 (a)) where the tube surrounds the ends of the cable sheaths 26, the exposed wires 28 and the connector 30, while positioning the connector 30 at generally center of the sleeve section 12.

In this regard, when the inner diamter of the sleeve section 12 is defined so as to form a cylindrical gap 32 between the inner surface of the sleeve section and the outer surfaces of the cable sheaths 26, the exposed wires 28, and the connector 30, it is possible to reduce the frictional resistance during the cable insertion and easily insert the cable 24 through the covering tube 10. The gap 32 may be minimized or eliminated to an extent that the sleeve section 12 does not tighten the connection of the cables. When the sleeve section 12 is made of a flexible material, it is also possible to confirm the position of the connector 30 in the covering tube 10 by depressing the tubular wall of the sleeve section 12 by the fingers.

After the covering tube 10 is located at the operating position shown in Figure 3(a), the core element 18 is removed from the sealing section 14 by pulling the free end of the extension 22 away in the direction shown by an arrow so as to spirally tear off the core element along the cut-line 20. Thereby, the elastically shrinkable element 16 of the sealing section 14 shrinks due to the high elastic recovery force and is closely fitted onto the outer surface of the cable sheath 26 in at least a waterproof manner over a predetermined area (see Figure 3(b)). In this regard, the length of the elastically shrinkable element 16 of the sealing section 14 should be suitably selected in accordance with the sealing distance (required for obtaining a reliable sealing effect) depending to a voltage applied to the cables for which the covering tube 10 is used, and preferably is not less than 10 mm.

The magnitued of the elastic recovery force (shrinkage force) of the elastically shrinkable element 15 of the sealing section 14 may be represented by the so-called "seal-stress (%)". According to the present invention, the dimensions of the covering tube 10 should be determined so that a seal stress of not less than 5% is obtained in the elastically shrinkable element 15, corresponding to the dimensions of the cable to which the covering tube is fitted. As a result, it is possible to achieve necessary and sufficient moisture resistant, electro-insulating, and protective effects in the covering tube according to the present invention. Note, the seal stress is calculated by the following formula.

Seal Stress = [(outer dia. of cable sheath 26 - inner dia. of non-expanded shrinkable element 16) / inner dia. of non-expanded shrinkable element 16] x 100.

As stated above, it is suitable that the core element 18 arranged in the sealing section 14 of each end of the covering tube 10 merely has a length corresponding to a sealing distance necessary for a cable to be connected, irrespective of the total length of the covering tube 10. Consequently, the time required for removing the core element 18 can be greatly shortended, in comparison with a conventional cored elastically shrinkable tube in which a core element is located over the entire length thereof. Also, it is possible to reduce the material cost and amount of waste caused by the core element. Further, since the sleeve section 12 made of a flexible material has a positioning function, it is possible to eliminate an excessive length for ensuring a reliable covering effect, in the total length of the covering tube 10, thereby reducing material costs.

In the above embodiment, a covering tube 10 applied for a linear connection of cables is described, but the covering tube of the present invention may also be applied for a branched connection of cables. Figure 4 shows a covering tube 34 applied for the branched cable connection as another embodiment of the present invention. In Figure 4, common reference numerals indicated the same or similar parts as in Figures 1 through 3.

4

The effects of the moisture resistant, electro-insulating functions and of the improvement of operability for the connection of cabels due to the covering tube of the present invention will be more apparent with reference to the evalutations of the following tests.

A covering tube to be tested had the same shape as that shown in Figure 1, wherein a sleeve section and elastically shrinkable elements of sealing sections were integrally molded by a die process from a conventional rubber material (HSR: high stretch rubber) used for a cored elastically shrinkable tube, containing EPDM (ethylene propylene diene monomer) as a primary component, and core elements of hard plastic materials were arranged in the shrinkable elements.

This covering tube was applied to a linear connection of PDC (pole transformer drop cable) insulated by cross-linked polyethylene. Thereafter, the connection is immersed into water, and an insulation resistance between the water and the electric wires is measured by an insulation-resistance tester under the condition of DC 1000 volts, thereby evaluating the waterproof, electro-insulating properties (Test 1). Further, air pressure is applied from the cable end to the connection fitted with the covering tube, and pressure causing air leakage is measured, thereby evaluating the air-tightness (Test 2). Moreover, the total time required for removing the core elements is measured under the condition where the covering tube is mounted on the connection, thereby evaluating the operability of fitting the covering tube (Test 3).

As comparative samples of covered connections treated by conventional method, the following samples were tested by above mentioned test 1 to 3; (1) a connection covered by winding a waterproof tape; (2) a connection covered by a plastic tubular member, the ends of the tubular member being sealed over 30 mm by waterproof tapes, and (3) a connection covered and insulated by a cored elastically shrinkable tube. The results are listed in Table 1 below.

Table 1

| Covering Method | Test 1 | Test 2 | Test 3 |
|---|---|---|---|
| (1) waterproof tape | $0.1M + \Omega$ and less | $0.1kgf/cm^2$ and less | --- |
| (2) tubular member + waterproof tape | $0.1M\Omega$ and less | $1.0kgf/cm^2$ and less | --- |
| (3) cored elastically shrinkable tube | $2000\ M\Omega$ and over | $1.0kgf/cm^2$ and over | 17 sec |
| covering tube of this invention | $2000\ M\Omega$ and over | $1.0kgfh/cm^2$ and over | 6 sec |

As is understood from Table 1, the covering tube according to the present invention gives much better results on the waterproof, electro-insulating properties and the air-tightness in comparison with those of the conventional waterproof tape treatment and the tubular member + waterproof treatment. Moreover, these properties are equal to those of the conventional cored elastically shrinkable tube. Regarding the operability, the present invention is also superior to the conventional cored elastically shrinkable tube.

As clear from the above description, according to the present invention, an excellent moisture resistant, electro-insulating and mechanical protecting properties, equal to those of a conventional cored elastically shrinkable tube, are imparted to a connection of electric wires. Further, the time required for removing the core elements can be shortened, therefore the covering tube can be quickly and easily fit, and the operability is improved. Moreover, the connection can be easily placed at a predetermined position inside the covering tube, thus improving the reliability of covering treatment.

**Claims**

1. A tube for covering a connection of electric wires, comprising a tubular sleeve section (12) made of an electrical-insulating flexible material, and electrical-insulating tubular sealing sections (14) respectively provided at end portions of the sleeve section (12); said tube being fitted onto the connection of electric wires (28) in such a manner that the sleeve section (12) covers bare portions of the electric wires (28) in the connection and the sealing sections (14) surround cable sheaths (26) adjacent to the bare portions,
   **characterized in that**
   each of said sealing sections (14) comprises:
   an elastically shrinkable element (16) connected to each end portion of said sleeve section (12) and brought into close contact with an outer surface of the cable sheath (26) due to shrinkage force of said shrinkable element (16) caused by being elastically expanded; and

a core element (18) arranged inside said elastically shrinkable element (16) so as to hold said shrinkable element (16) in an elastically expanded state in which an inner diameter of said shrinkable element ((16) is greater than an outer diameter of the cable sheath (26) and adapted to be removed when fitting said tube onto the connection.

2. A tube for covering a connection of electric wires as defined in claim 1, wherein at least said elastically shrinkable element (16) of each sealing seactions (14) is made of a rubber material having high elastic recovery and excellent elongation set properties.

3. A tube for covering a connection of electric wires as defined in claim 1 or 2, wherein said sleeve section (12) is integrally molded with said elastically shrinkable element (16) of each sealing section (14).

4. A tube for covering a connection of electric wires as defined in any one of claims 1 to 3, wherein a minimum inner diameter of said sleeve section (12) is greater than a maxiumum outer diameter of the connection onto which the tube is fitted.

5. A tube for covering a connection of electric wires as defined in any one of claims 1 to 4, wherein said sleeve section (12) is of a straight pipe.

6. A tube for covering a connection of electric wires as defined in any one of claims 1 to 4, wherein said sleeve section (12) is of a branched pipe.

FIG.1

FIG.2

FIG.3a

FIG.3b

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 541 000 (PIRELLI CAVI) <br> * abstract * | 1-4 | H02G15/18 <br> H02G1/14 |
| A | * column 6, line 36 - column 7, line 8; figures 1,2 * | 5 | |
| | --- | | |
| X | EP-A-0 504 035 (CABLES PIRELLI) | 1-4 | |
| A | * column 6, line 20 - line 35; figure 3 * | 5 | |
| | --- | | |
| X | US-A-3 946 480 (COMMUNICATIONS TECHNOLOGY) <br> * abstract; figures 1-4 * | 1-5 | |
| | --- | | |
| A | US-A-3 515 798 (J.A. SIEVERT) <br> * figure 1 * | 1-5 | |
| | --- | | |
| A,D | EP-A-0 424 090 (MINNESOTA MINING AND MANUFACTURING COMPANY) <br> * abstract; figures 1-4 * | 1-4 | |
| | ----- | | |
| | | | TECHNICAL FIELDS SEARCHED (Int.Cl.6) <br><br> H02G <br> B29C |

The present search report has been drawn up for all claims

| Place of search | Date of completion of the search | Examiner |
|---|---|---|
| THE HAGUE | 25 November 1994 | Lommel, A |

EPO FORM 1503 03.82 (P04C08)